# EUROPÄISCHE PATENTANMELDUNG

(11) **EP 1 547 709 A2**
(43) Veröffentlichungstag der Anmeldung: **29.06.2005**
(21) Anmeldenummer: 05001895.1
(22) Anmeldetag: 26.03.2001
(51) Int. Cl.: B23B 31/12

(54) **Bohrfutter**

(30) Priorität: 03.07.2000 EP 00113184
(62) Teilanmeldung aus: 01107531.4
(71) Anmelder: Röhm GmbH, 89567 Sontheim (DE)
(72) Erfinder: Röhm, Günter Horst, 89567 Sontheim (DE)
(74) Vertreter: Hentrich, Swen Dipl.-Phys. Dr.

(57) **Zusammenfassung**

Die Erfindung betrifft ein schlüsselloses Bohrfutter mit einem an eine Bohrspindel anschließbaren Futterkörper (1), mit zwischen sich eine Aufnahme für das Bohrwerkzeug bildenden Spannbacken (5), die mit einer Verzahnung (6) in ein Spanngewinde eines Gewinderings (8) eingreifen, an dem ein Zwischenring (18) drehfest angeschlossen ist, der eine Führung für eine der Verstellung der Spannbacken (5) dienende Spannhülse (9) bildet. Die Spannhülse (9) ist im Bereich axial hinter dem Gewindering (8) an einer mit dem Futterkörper (1) verbundenen Abschlußscheibe (85) gesichert.

## Beschreibung

Die Erfindung betrifft ein schlüsselloses Bohrfutter mit einem an einer Bohrspindel anschließbaren Futterkörper, mit zwischen sich eine Aufnahme für das Bohrwerkzeug bildenden Spannbacken, die in geneigt zur Futterachse verlaufenden Führungsaufnahmen zum Öffnen und Schließen des Bohrfutters durch einen am Futterkörper drehbar und axial unverschiebbar geführten Gewindering verstellbar sind, und mit einer der Verstellung der Spannbacken durch Verdrehung des Gewinderings dienenden Spannhülse.

Ein derartiges Bohrfutter ist aus der EP 0 785 041 A1 bekannt, bei dem die Spannhülse zweiteilig mit einem äußeren metallenen Mantel und einem inneren, aus Kunststoff gefertigten Mantel gebildet ist. Dabei dient der äußere Mantel dazu, eine gegen Beschädigungen unempfindliche und widerstandsfähige Außenfläche bereitzustellen, so daß Beschädigungen im Bohrbetrieb oder durch Ansetzen einer Zange zum Drehen der Spannhülse weitgehend vermieden werden, während der innere, aus Kunststoff bestehende Mantel dazu vorgesehen ist, zur Ausbildung einer Steuerkurve geformt zu werden, die der Betätigung einer die Verdrehung des Gewinderinges verhindernden bzw freigebenden Sperreinrichtung dient. Die Formung der Steuerkurve ist im Spritzgußverfahren leicht möglich, mit dem auch komplizierte Gestaltungen gefertigt werden können. Dieses bekannte Bohrfutter vermeidet den Nachteil, die Steuerkurve von innen heraus durch spanende Bearbeitung herstellen zu müssen, was nur unter hohen Material-, Kosten- und Zeitaufwand möglich wäre.

Der Erfindung liegt die Aufgabe zugrunde, ein Bohrfutter der eingangs genannten Art so auszubilden, daß dessen Montage vereinfacht ist.

Die der Erfindung zugrunde liegende Aufgabe wird bei einem Bohrfutter der eingangs genannten Art gelöst durch eine Ausführungsform, die gekennzeichnet ist durch eine hinter dem Gewindering angeordnet, am Futterköper axial nach vorn gestützte, der axialen Sicherung der Spannhülse dienenden Hohlscheibe.

Dieses erfindungsgemäße Bohrfutter bietet den Vorteil, daß die Spannhülse in einfacher Weise auf den Futterkörper aufgesteckt werden und durch die Abschlußscheibe gesichert werden kann, so daß die axiale Sicherung der Spannhülse an axial rückwärtigen Bereich erfolgt. Zusätzlich läßt sich durch diese Art der axialen Sicherung der Abschlußscheibe auch eine gefederte Lagerung der Spannhülse realisieren, die eine Dämpfung der beim Antreiben der Bohrspindel auftretenden und auf die Spannhülse übertragenen Vibrationen bewirkt, was zum eine als angenehm empfunden wird, wenn der Nutzer zum Spannen bzw Lösen des Werkzeugs die Spannhülse mit der Hand ergreift und festhält. Darüber hinaus treten auch Vorteile im Bohrbetrieb auf, da eine Zentrierung der Spannhülse bewirkt wird. Schließlich ist es auch günstig, daß bei der motorischen Verstellung der Spannbacken in ihre rückwärtige Extremposition einer Klemmung der Spannbacken mit ihren Zahnreihen in dem Gewinde des Gewinderinges entgegengewirkt wird, da der mit der Spannhülse verbundene Gewindering gleichfalls von der Federwirkung profitiert. Für eine möglichst einfache Montage ist es vorteilhaft, wenn die Abschlußscheibe im Bereich des rückwärtigen Ringendes der Spannhülse in eine an der Spannhülse ausgebildeten Nut eingreift.

Weitere Gestaltungsmöglichkeiten und Vorteile ergeben sich aus den Merkmalen der Unteransprüche.

Alternativ läßt sich die gewünschte Federwirkung auch erzielen, indem an der Abschlußscheibe radial federnde Zungen ausgebildet sind zum Eingriff in die an der Spannhülse ausgebildeten Nut.

Vorteile für einen störungsfreien Bohrbetrieb und eine lange Lebensdauer des Bohrfutter bieten sich, wenn in der Abschlußscheibe Öffnungen ausgebildet sind. Diese Öffnungen ermöglichen den Austritt von beim Bohrbetrieb auftretenden Bohrstaub, der beim Verbleib im Inneren den Verschleiß erhöhen würde.

Die Vorteile des erfindungsgemäßen Bohrfutters zeigen sich besonders deutlich, wenn die Spannhülse eine Steuerkurve zur Betätigung einer die Verdrehung des Gewinderinges verhindernden bzw freigebenden Sperreinrichtung aufweist. Die axiale Sicherung der Spannhülse axial hinten am Bohrfutter schafft einen Freiraum zur einfacheren und variableren Anordnung der Sperreinrichtung, deren Funktionen, insbesondere sichere Verriegelung nicht durch Vibrationen gefährdet ist, die aufgrund der Federwirkung weitgehend gedämpft werden.

Es ist vorgesehen, daß die Steuerkurve durch Stege gebildet ist, die von der radial äußeren Seite der aus Metall bestehenden Spannhülse nach innen vorstehen. Dies bietet den Vorteil, daß nicht im Inneren der Spannhülse die Strukturen zur Bildung der Steuerkurve herausgearbeitet werden müssen, sondern daß die Spannhülse von der Außenseite aus bearbeitet werden kann, wobei diese dabei so verformt wird, daß sich auf der Innenseite die Steuerkurve ausbildet.

Dabei ist besonders bevorzugt, wenn die Stege durch die Seitenwände mindestens einer in die Spannhülse eingeprägten Tasche gebildet sind, da die Tasche ein in sich stabiles Gebilde darstellt, das bei der üblichen Beanspruchung bei Verstellung der Spannhülse nicht deformiert wird.

Günstig ist es weiterhin, wenn die in Umfangsrichtung der Spannhülse einander gegenüberliegenden Stege der Taschen zur Betätigung der Sperreinrichtung vorgesehen sind, da so die zur Verstellung der Spannbacken notwendige Drehbewegung genutzt werden kann, um die Sperreinrichtung zu betätigen. Dabei können über den Umfang der Spannhülse verteilt mehrere Taschen vorgesehen sein, die dann auch dazu genutzt werden können, eine Fingerkuppe in diese einzulegen, um so beim Verdrehen der Spannhülse ein großes Drehmoment erzeugen zu können.

Alternativ besteht auch die Möglichkeit, daß die Steuerkurve durch eine Kappe überdeckt ist, wobei zweckmäßigerweise die Kappe durch eine axial am Futterkörper abgestützte Staubschutzkappe gebildet ist.

Um ein sicheres Funktionieren der Sperreinrichtung zu gewährleisten, ist weiterhin vorgesehen, daß die Sperreinrichtung aus einem koaxialen Kranz von Sperrausnehmungen und aus mindestens einem Sperrglied besteht, das unter der Kraft einer Sperrfeder durch die Steuerkurve in die Sperrausnehmungen einrückbar ist, wobei das Sperrglied und die Sperrausnehmungen einander in derart geneigten Flankenflächen anliegen, daß diese den Gewindering in der dem Öffnen des Bohrfutters entsprechenden Drehrichtung gegen Verdrehen sperren und beim Verdrehen in der anderen Drehrichtung das Sperrglied gegen die Kraft der Sperrfeder aus den Sperrausnehmungen herausdrücken, und daß durch eine der in die Spannhülse eingeprägten Taschen ein Schaltnocken zur Federspannung gegeben ist. Vorteilhaft ist dabei, wenn der Gewindering drehfest mit einem koaxialen Zwischenring verbunden ist, der die Sperrfeder und das Sperrglied trägt, und wenn der Zwischenring durch Anschläge begrenzt relativ zur Spannhülse verdrehbar ist.

Bevorzugt ist weiterhin eine Ausführungsform, die dadurch gekennzeichnet ist, daß eine in Umfangsrichtung zwei Raststellungen aufweisende Rasteinrichtung vorgesehen ist, wobei sich das durch einen Rastnocken einer Rastfeder gebildete Rastglied bei dem in die Sperrausnehmungen eingerückten Sperrglied in der einen Raststellung und bei dem ausgerückten Sperrglied in der anderen Raststellung befindet, und daß die Steuerkurve die beiden Raststellungen beinhaltet. Die Rasteinrichtung dient dazu, bei offenem Bohrfutter die gegenseitige Drehmitnahme von Spannhülse und Zwischenring zu sichern und bei geschlossenem Bohrfutter auszuschließen, daß sich im Bohrbetrieb die Spannhülse selbsttätig gegenüber der Zwischenhülse verstellt und so die Sperreinrichtung betätigt. Insbesondere soll die Rasteinrichtung auch sicher stellen, daß bei offenem Bohrfutter der Gewindering von der Spannhülse beim Verdrehen mitgenommen wird, ohne daß das Sperrglied in den eingerückten Zustand verstellt wird.

Da die aus Metall gefertigte Spannhülse eine gegenüber aus Kunststoff bestehenden Spannhülsen eine größere Masse aufweist und bei modernen Bohrmaschinen als Sicherheitseinrichtung eine Spindelstop-Funktion realisiert ist, wird die Sperreinrichtung stärker belastet. Um deren Funktioniere sicherzustellen, ist vorgesehen, daß an der Sperrfeder zwei zum simultanen Eingriff in die Sperrausnehmungen zur gemeinsamen Kraftübertragung vorgesehenen Sperrglieder ausgebildet sind, denen jeweils eine Tasche als Schaltnocken zugeordnet ist.

Weil beide Sperrglieder ihre Funktion nur ausüben können, wenn diese auch in Kontakt zu den als Randverzahnung realisierten Sperrausnehmungen gelangen, ist es zweckmäßig, wenn die Sperrfeder mit einem die Ausrichtung der Sperrglieder gegenüber der Sperrausnehmung ermöglichenden Spiel im Zwischenring angeordnet ist. Alternativ besteht naturgemäß die Möglichkeit, die Elastizität der Feder selber auszunutzen, um ein simultanes Anliegen der Sperrglieder an der Randverzahnung zu erreichen.

Hinsichtlich einer hohen Belastbarkeit der Sperrfeder ist es zweckmäßig, wenn die beiden Sperrglieder an den Enden der Sperrfeder angeordnet sind, wenn das in der dem Öffnen des Bohrfutter entsprechenden Drehrichtung vorn liegende Sperrglied in Richtung Sperrausnehmungen abgekröpft und das andere Sperrglied schleifenförmig gestaltet ist zur Einwirkung auf die zum vorderen Sperrglied übereinstimmende Flankenfläche.

Vorgesehen ist weiterhin, daß die Abschlußscheibe auf ihrer Planseite Verstärkungrippen aufweist, und daß die Verstärkungsrippen mittig innerhalb der Bundsegmente angeordnet sind. Diese Verstärkungsripppen dienen dazu, die Federwirkung genauer auf die gewünschte Größe abzustimmen, insbesondere die Federwirkung in axialer Richtung und radialer Richtung zu modifizieren.

Eine Federwirkung der Abschlußscheibe läßt sich in besonders einfacher Weise auch dadurch erreichen, daß die Abschlußscheibe zweiteilig mit einem dem Futterkörper zugeordneten Ring gebildet ist, der einen an der Spannhülse verankerten Sicherungsring abstützt.

Im folgenden soll die Erfindung an in der Zeichnung dargestellten Ausführungsbeispiele näher erläutert werden; es zeigen:
- Fig. 1: ein Bohrfutter links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II aus Fig. 1, und zwar in der Teilfig. 2.1 im ungesperrten, in der Teilfig. 2.2 im gesperrten Futterzustand,
- Fig. 3: den Schnitt III - III aus Fig. 1,
- Fig. 4: eine der Fig. 2.1 entsprechende Darstellung einer weiteren Ausführungsform,
- Fig. 5: eine der Fig. 1 entsprechende Darstellung einer weiteren Ausführungsform,
- Fig. 6: eine der Fig. 1 entsprechende Darstellung eines Bohrfutters mit einer axial rückwärtig hinter dem Gewindering angeordneten Abschlußscheibe der Spannhülse sowie mit einer Griffhülse,
- Fig. 7: die Darstellung einer Ausführungsform mit der dem Druckring zugeordneten Sperrverzahnung,
- Fig. 8: den Schnitt VIII - VIII aus Fig. 1,
- Fig. 9: eine der Fig. 1 entsprechende Darstellung einer Ausführungsform mit bis zum axial rückwärtigem Ende des Futterkörpers reichender Spannhülse,
- Fig.10: den Schnitt X - X aus Fig. 9,
- Fig.11: eine der Fig. 1 entsprechende Darstellung einer Ausführungsform mit der gegenüber der Abschlußscheibe eingebördelter Spannhülse,
- Fig.12: eine nochmals andere Ausführungsform zur axialen Sicherung der Spannhülse am axial rückwärtige Ende des Futterkörpers,
- Fig.13: den Schnitt XIII - XVIII aus Fig. 12,
- Fig.14: eine der Fig. 2.2 entsprechende Darstellung einer Ausführungsform mit einer Sperrfeder erhöhter Dämpfung,
- Fig.15: eine der Fig. 2.2 entsprechende Darstellung mit einer modifizierten Sperrfeder mit 2 Schaltnoppen,
- Fig.16: eine Fig. 14 entsprechende Darstellung einer Sperrfeder mit 2 Rastgliedern und 2 Schaltnoppen,
- Fig.17: eine Fig. 15 entsprechende Darstellung mit 2 Sperrfedern,
- Fig.18: eine Fig. 15 entsprechende Darstellung mit einer das Sperrglied und einer das Rastglied tragenden Feder,
- Fig.19: eine zu Fig. 18 alternative Ausführungsform,
- Fig.20: eine zu Fig. 18 alternative Ausführungsform mit 3 Feder,
- Fig.21: eine zu Fig. 20 alternative Ausführungsform,
- Fig.22: eine zu Fig. 20 alternative Ausführungsform mit 4 Federn,
- Fig. 23: eine der Fig. 1 entsprechende Darstellung mit einer Verstärkungsrippen aufweisenden Abschlußscheibe,
- Fig. 24: eine Draufsicht auf das Bohrfutter aus Fig. 23.
- Fig. 25: eine der Fig. 1 entsprechende Darstellung mit einer zweiteiligen Abschlußscheibe, und
- Fig. 26: eine Draufsicht auf das Bohrfutter aus Fig. 25.

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel weist der Futterkörper 1 eine Gewindeaufnahme 2 auf, an die sich nach vorn ein axialer Durchgang 80 anschließen kann, um die Schläge eines in der Bohrspindel verschiebbar geführten Schlägers oder Döppers unmittelbar auf das Schaftende des in einer Werkzeugaufnahme 4 gehaltenen Bohrers übertragen zu können. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse 3 verstellbar sind. Die Ausführungsformen zeigen von Hand spannbare Bohrfutter, bei welchen die Spannbacken 5 im Futterkörper 1 geführt und über eine Backenverzahnung 6 mit einem Spanngewinde an einem Gewindering 8 in Eingriff stehen. Zur Verstellung der Spannbacken 5 dient der Gewindering 8, der am Futterkörper 1 axial unverschiebbar und drehbar geführt und axial nach hinten über ein Kugellager 22, gegebenenfalls über einen Druckring 21, am Futterkörper 1 abgestützt ist.

Um unerwünschte Verstellungen der Spannbacken 5 zu verhindern, kann die Drehstellung des Gewinderings 8 fixiert werden. Dazu dient eine allgemein mit 11 bezeichnete und zwischen dem Gewindering 8 und dem Futterkörper 1 ausgebildete Sperreinrichtung, die aus einem koaxialen Kranz von Sperrausnehmungen 10 auf der Seite des Futterkörpers 1 und auf der Seite des Gewinderings 8 aus mindestens einem Sperrglied 12 besteht, das unter der Kraft einer Sperrfeder in die Sperrausnehmungen 10 greift. Dabei liegen das Sperrglied 12 und die es aufnehmenden Sperrausnehmungen 10 einander in derart geneigten Flankenflächen an, daß diese den Gewindering 8 in der dem Öffnen des Bohrfutters entsprechenden Drehrichtung (Pfeil 14) gegen Verdrehen verriegeln, beim Verdrehen des Gewinderings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung 10 zu Sperrausnehmung 10 entlang dem Umfang des Futterkörpers 1 verrutschen lassen. Unter den im Bohrbetrieb auftretenden Schwingungsbeanspruchungen des Bohrfutters bleibt das Bohrfutter aber auch in dieser dem Pfeil 15 entsprechenden Drehrichtung gesperrt. Die für dieses Sperrverhalten unterschiedliche Neigung der Flankenflächen wird auf einfache Weise durch eine sägezahnförmige Gestaltung erreicht, wobei die steilere Flankenfläche der Zahnbrust und die flachere Flankenfläche dem Zahnrücken entspricht.

Das Sperrglied 12 kann zwischen seinen an den Sperrausnehmungen 10 ein- und ausgerückten Zuständen verstellt werden, wozu das Sperrglied 12 durch eine Steuerkurve 35 an einer koaxialen, ebenfalls axial unverschiebbaren Spannhülse 9 verstellbar und entsprechend die Spannhülse 9 relativ zum Gewindering 8 verdrehbar ist. Die Steuerkurve 35 ist durch Stege 81 gebildet, die von der radial äußeren Seite der aus Metall bestehenden Spannhülse 9 nach innen vorstehen und durch eine Bodenplatte 82 verbunden sind, die insbesondere durch die Seitenwände von in die Spannhülse 9 eingeprägten Taschen 83 gebildet sind, wobei eine in die Spannhülse 9 eingeprägte Tasche 83 als Schaltnocken 84 für das Sperrglied 12 fungiert und damit die in Umfangsrichtung der Spannhülse 9 einander gegenüberliegenden Stege der Taschen 83 zur Betätigung der Sperreinrichtung 11 vorgesehen sind.

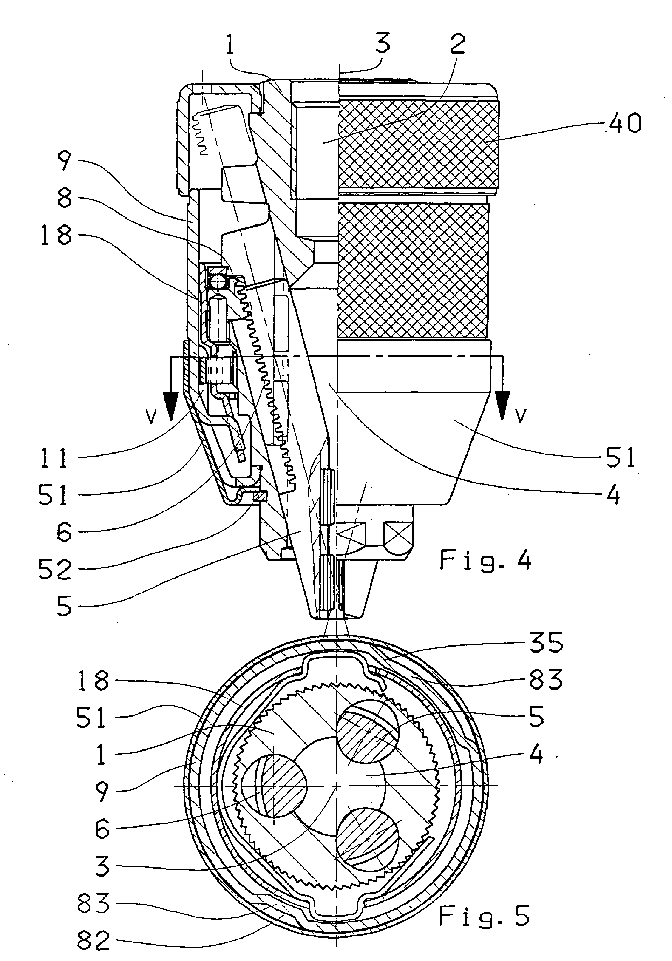

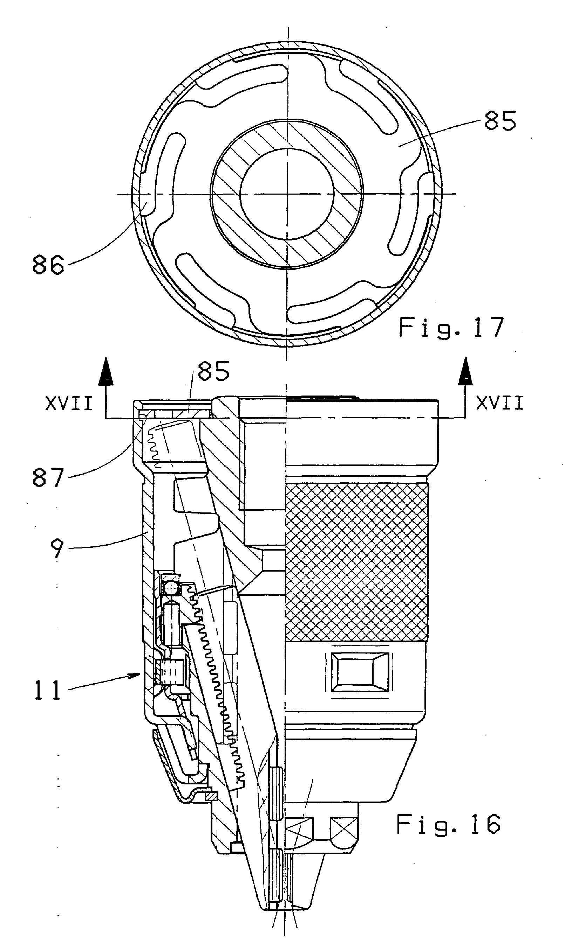

Bei der Ausführungsform gemäß der Fig. 4 sind an der Sperrfeder zwei zum simultanen Eingriff in die Randverzahnung zur gemeinsamen Kraftübertragung vorgesehene Sperrglieder 12 ausgebildet, denen jeweils eine Tasche 83 als Schaltnocken 83 zugeordnet ist, wobei die Sperrfeder mit einem die Ausrichtung der Sperrglieder 12 gegenüber den Sperrausnehmungen 10 ermöglichenden Spiel in einem Zwischenring 18 angeordnet ist. Die beiden Sperrglieder 12 sind an den Enden der Sperrfeder angeordnet, wobei das in der dem Öffnen des Bohrfutter entsprechenden Drehrichtung (Pfeil 14) vorn liegende Sperrglied 12 in Richtung Sperrausnehmungen 10 abgekröpft ist und das andere Sperrglied 12 schleifenförmig gestaltet ist zur Einwirkung auf die zum vorderen Sperrglied 12 übereinstimmende Flankenfläche. Es ist gleichfalls möglich, die beiden Sperrglieder 12 separaten Sperrfedern zuzuordnen. Es ist jeweils eine eigene Tasche 83 als Teil der Steuerkurve 35 zur Verstellung der Sperrglieder 12 vorgesehen (Fig. 17, 21,22).

Die Verdrehung der Spannhülse 9 relativ zum Gewindering 8 ist in beiden Drehrichtungen (Pfeile 14, 15) formschlüssig begrenzt, wozu Anschläge 16', 16" vorgesehen sind. Durch Verdrehen der Spannhülse 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen der Spannhülse 9 in der dem Öffnen des Bohrfutters entsprechenden Drehrichtung (Pfeil 14) aus dem eingerückten Zustand in den ausgerückten Zustand.

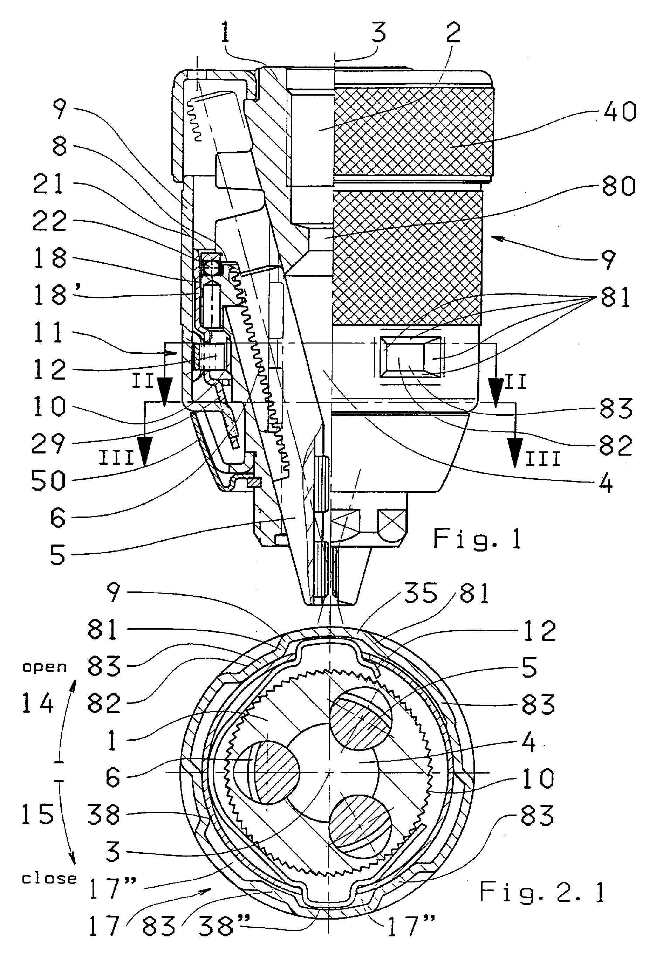

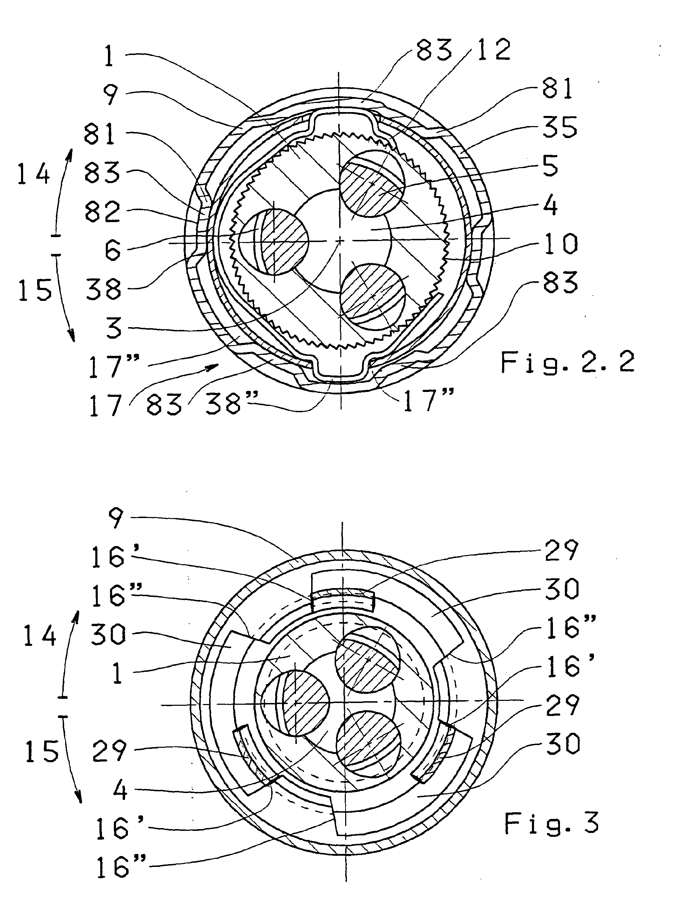

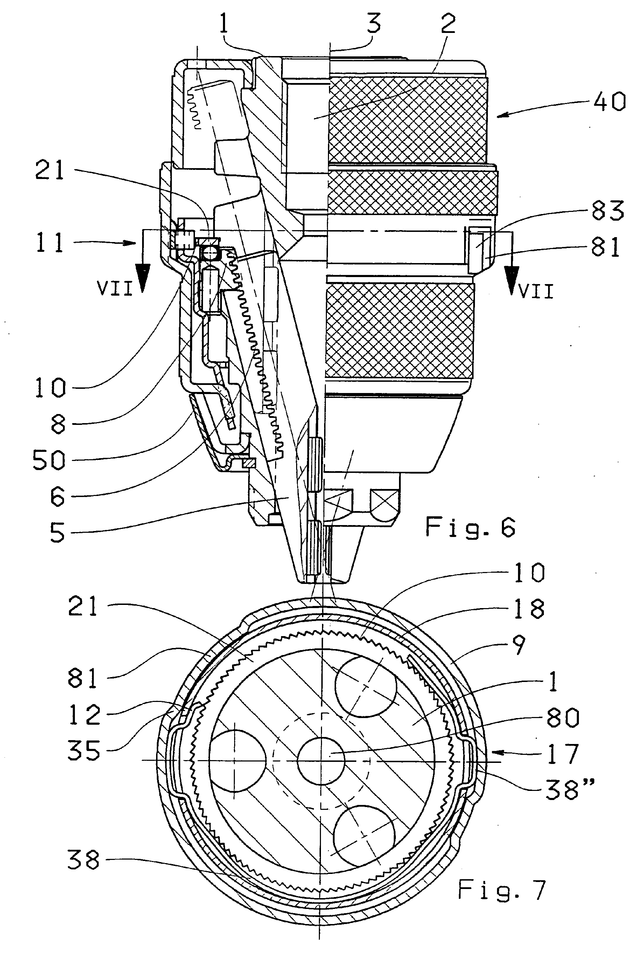

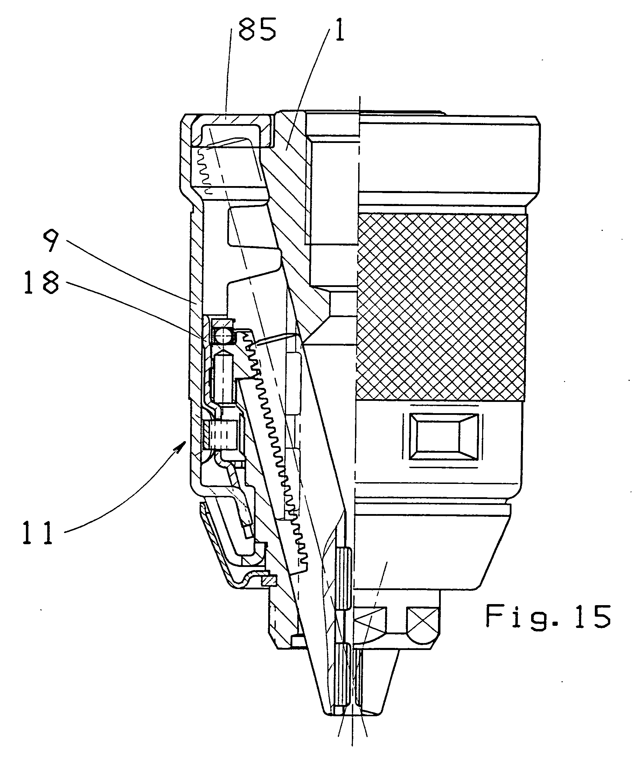

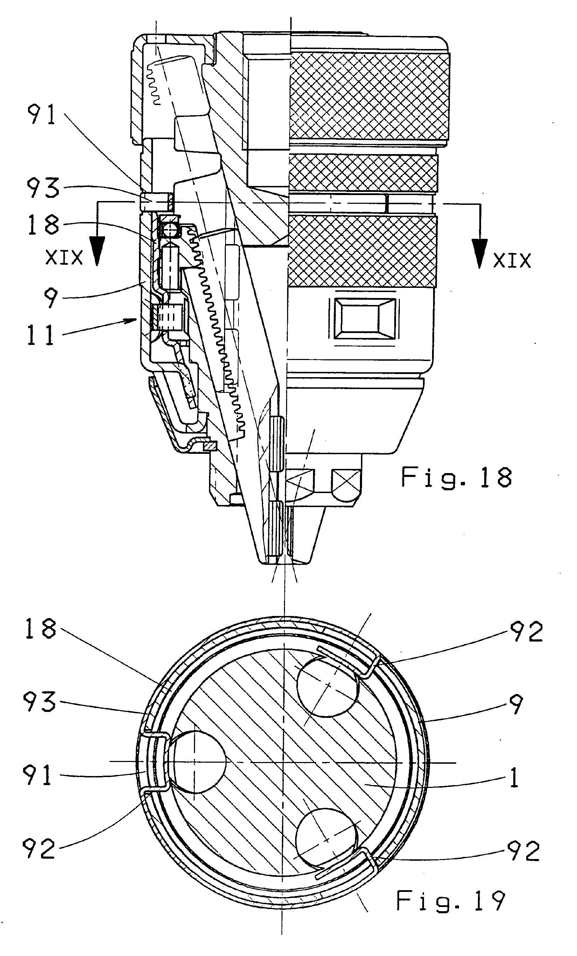

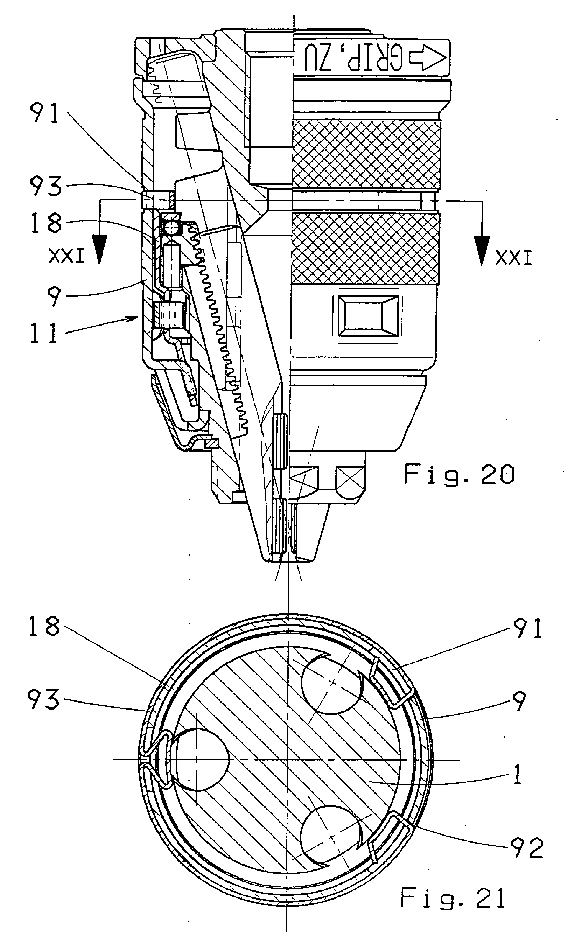

Zwischen der Spannhülse 9 und dem Gewindering 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich des Figurenpaares 2.1 und 2.2 erkennen läßt. Dabei sind die Raststellungen durch den Eingriff eines von der Kraft einer Rastfeder beaufschlagten Rastgliedes 38" auf der Seite des Gewinderings 8 in entsprechend an der Spannhülse 9 angeordnete Rastaufnahmen 17" gebildet, die Teil der Steuerkurve 35 und gleichfalls durch in die Spannhülse 9 eingeprägte Taschen 83 verwirklicht sind. Das Rastglied 38" ist insbesondere durch einen Rastnocken der Rastfeder gebildet. Die Sperrfeder und die Rastfeder sind in den Fig. 2.1, 2.2, 7, 15 und 16 gemeinsam von einem Federbügel 38 gebildet, der sich in Umfangsrichtung längs des Gewinderings 8 erstreckt und drehfest mit dem Gewindering 8 verbunden ist. Der Federbügel 38 kann mehrfach vorgesehen sein (Fig. 17), wodurch auch die Rasteinrichtung 17 mehrfach realisiert ist. Alternativ besteht auch die Möglichkeit einer von dem Sperrglied 12 mit Sperrfeder getrennten Ausbildung der Rasteinrichtung 17, die dann gleichfalls mehrfach und damit redundant vorhanden sein kann (Fig. 18, 20, 22).

Der Gewindering 8 besitzt den eine Führung für die Spannhülse 9 bildenden koaxialen Zwischenring 18, der die gewinderingseitigen Teile der Anschläge 16', 16" für die Spannhülse und außerdem den Federbügel 38 trägt, sowie einen Kragenteil 18' umfaßt, der den das Spanngewinde tragenden Teil des Gewinderings 8 drehfest umschließt. Dabei besteht der das Spanngewinde tragende Teil des Gewinderings 8 aus zwei umfangsmäßig geteilten, nämlich zunächst an jeder Teilung durch eine Bohrung geschwächten und dann gebrochenen Ringhälften, die in einer Ringnut des Futterkörpers 1 gegeneinander zusammengesetzt und durch den Kragenteil 18' am Futterkörper 1 zusammengehalten sind. Selbstverständlich kann aber der Gewindering 8 auch einstückig ausgebildet sein, was jedoch in der Zeichnung nicht weiter dargestellt ist.

In allen Fällen besitzt der Gewindering 8 bzw. Zwischenring 18 zur radialen Führung der Spannhülse 9 eine kreiszylindrische Außenfläche, der die Spannhülse 9 mit einer entsprechend kreiszylindrischen Innenfläche anliegt.

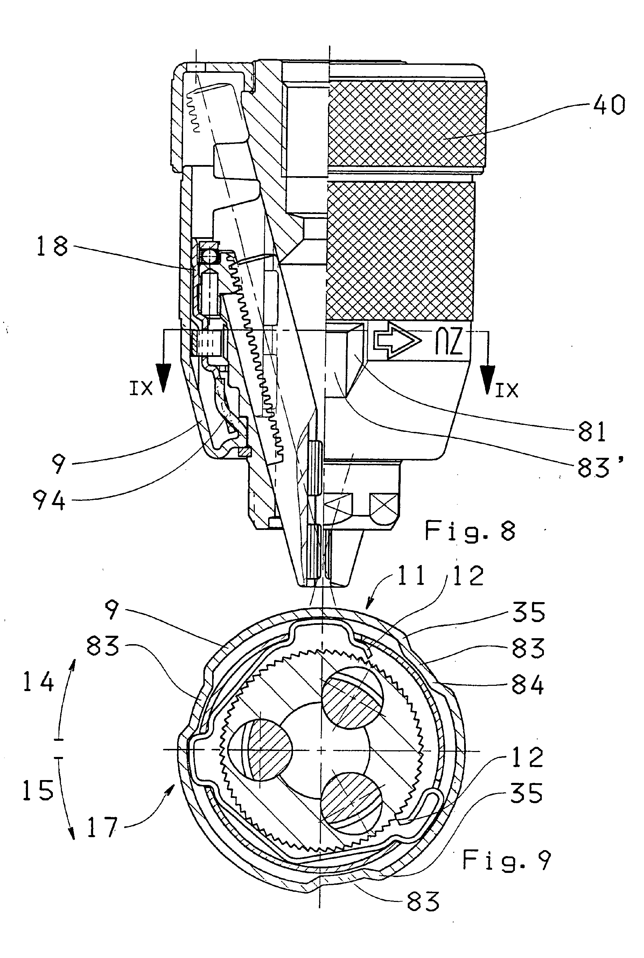

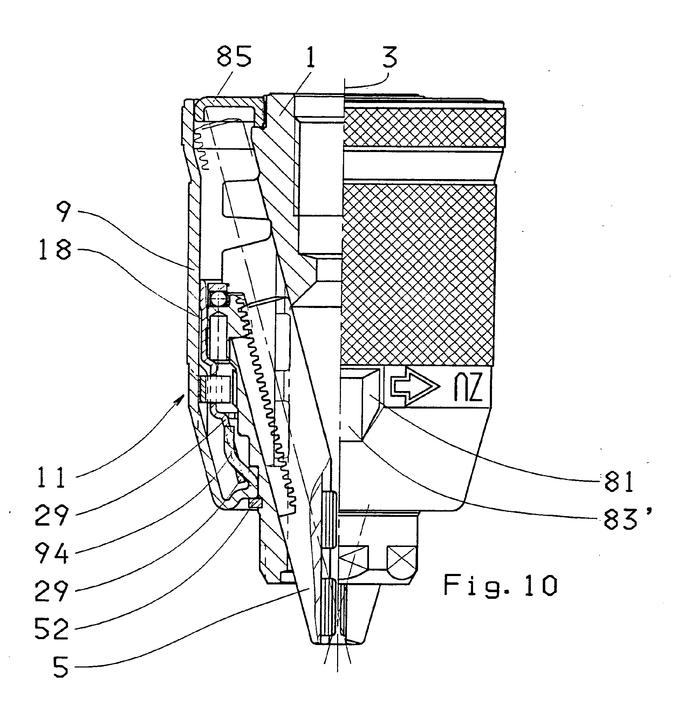

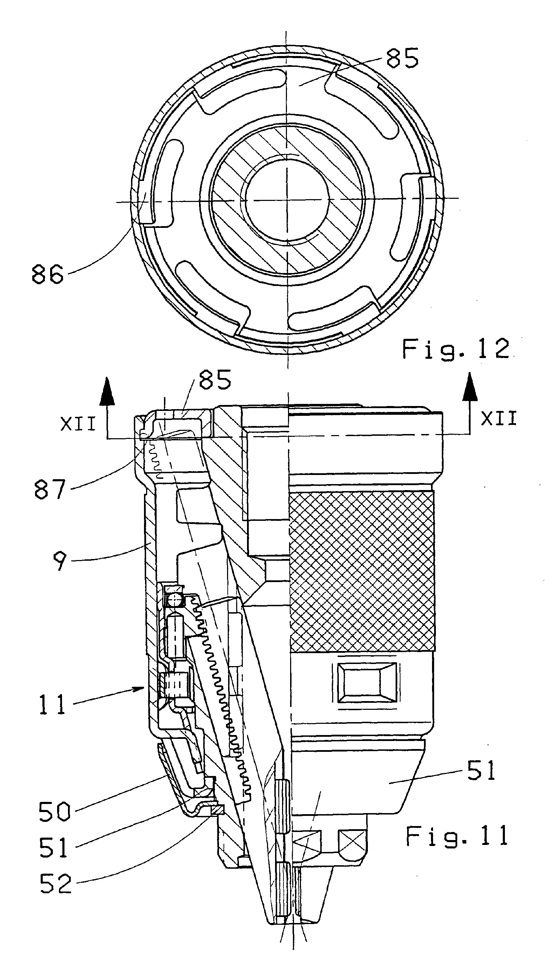

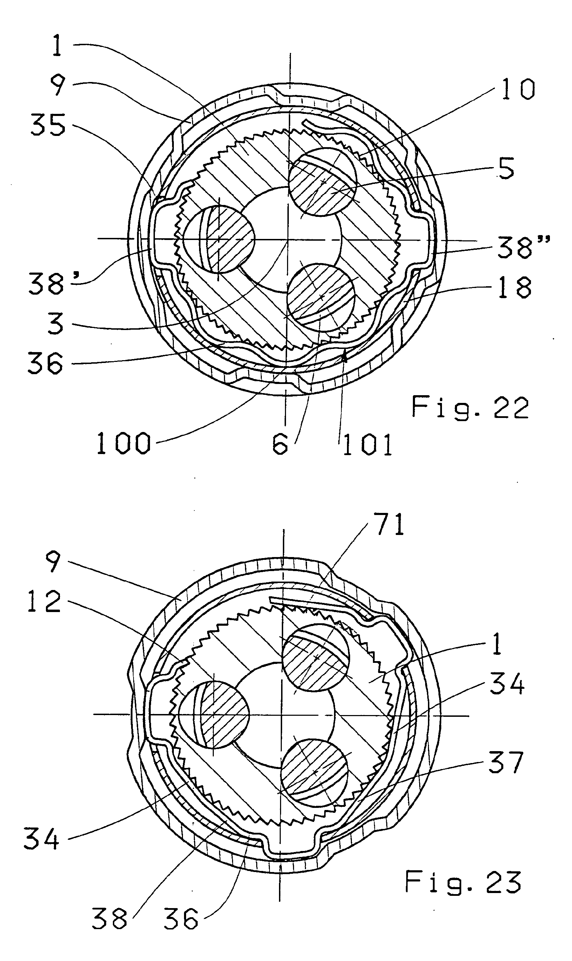

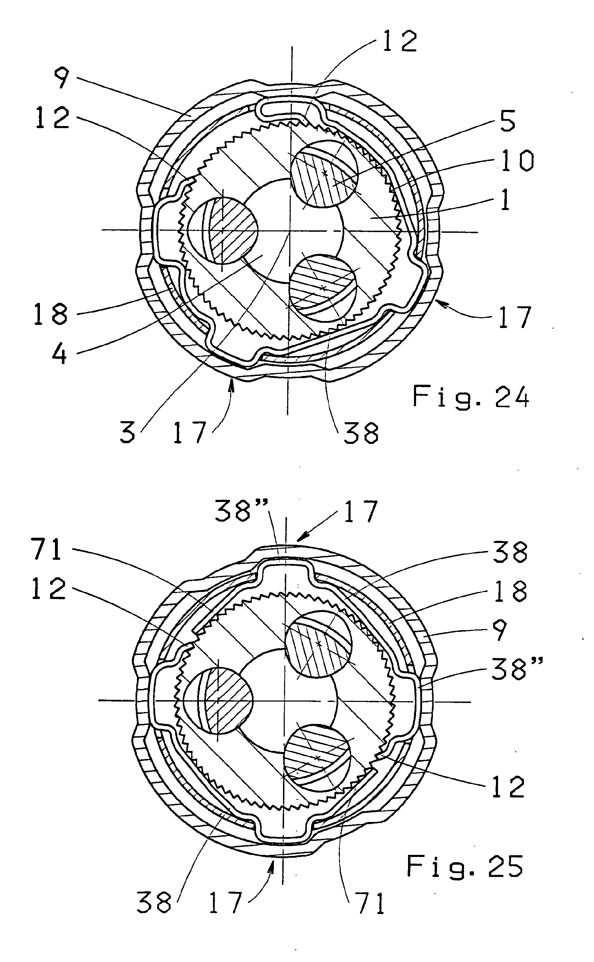

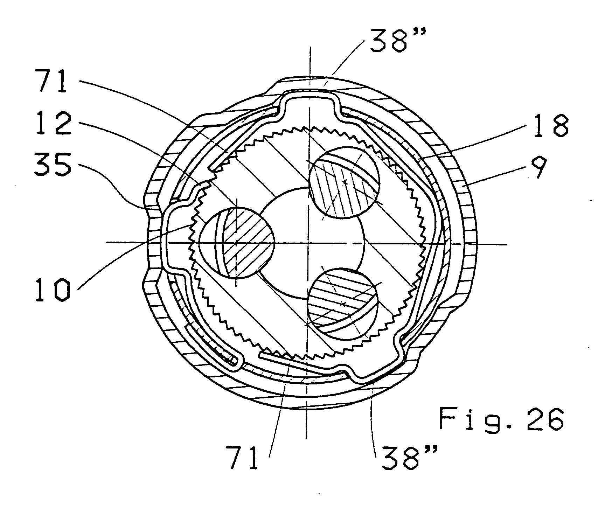

In den Ausführungsbeispielen wird die in axialer Richtung ungeteilt ausgebildete Spannhülse 9 axial von vorn her über den Futterkörper 1 auf den am Futterkörper 1 fertig montierten Gewindering 8 aufgeschoben werden, worauf die Spannhülse 9 in ihrer aufgeschobenen Endlage axial gesichert wird. Die Sicherung der Spannhülse 9 gegen axiale Verschiebungen erfolgt im Bereich axial hinter dem Gewindering 8 am Futterkörper 1 an einer mit dem Futterkörper 1 verbundenen Abschlußscheibe 85, die auch zur radialen Führung der Spannhülse 9 im Bereich ihres rückwärtigen Ringendes beiträgt. Im einzelnen sind an der Abschlußscheibe 85 sich in Umfangsrichtung erstreckende, radial federnde Zungen 86 ausgebildet (Fig. 1 und 8) zum Eingriff in eine an der Spannhülse 9 ausgebildeten Nut 87. Bei der Ausführungsform nach Fig. 9 und 10 ist an der Abschlußscheibe 85 ein Scheibenbund 88 angeformt, der zum Erzielen einer radialen Federwirkung durch Bundsegmente 89 gebildet ist, die ein Einführen von deren radial nach außen gekrümmten Enden 90 in die Nut 87 ermöglicht. Fig. 11 zeigt einen zwischen Abschlußscheibe 85 und Spannhülse 9 ausgebildeten Preßsitz, zu dessen Realisierung das axial rückwärtige Ende der Spannhülse 9 eingebördelt ist. In der Abschlußscheibe 85 sind weiterhin Öffnungen 104 ausgebildet, die benachbart zu den Bundsegmenten 89 oder den Zungen 86 angeordnet sind und der Abfuhr von Bohrschmutz dienen. In dem Ausführungsbeispiel nach den Fig. 23 und 24 weist die Abschlußscheibe weiterhin Verstärkungsrippen 105 auf, die mittig zu den Bundsegmenten 89 angeordnet sind. Die Fig. 25 und 26 zeigen eine Ausführungsform, bei der die Abschlußscheibe (85) zweiteilig mit einem dem Futterkörper (1) zugeordneten Ring gebildet ist, der einen an der Spannhülse (9) verankerten Sicherungsring (106) abstützt.

Axial vor der Spannhülse 9 ist ein ihr gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt die Spannhülse 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 die Spannhülse 9 gegen größere axiale Belastung von vorn, so daß die axiale Abstützung der Spannhülse 9 nach hinten entsprechend gering beansprucht wird. Weiterhin ist der Anschlagring 50 als Kappe 51 bzw Staubschutzkappe nutzbar, die die Steuerkurve 35 überdeckt.

Für die Anschläge 16', 16" zur Drehbegrenzung zwischen der Spannhülse 9 und dem Gewindering 8 sind in den Ausführungsbeispielen allgemein mit 29 bezeichnete Anschlagstücke und eine das Anschlagstück 29 aufnehmende Aussparung 30 vorgesehen, wobei das Anschlagstück 29 an den Enden des Drehwegs jeweils mit einer der die Aussparung 30 in Umfangsrichtung begrenzenden beiden Stirnflächen 16', 16" zum Anschlag kommt. In den Ausführungsbeispielen sind jeweils drei solche gleichmäßig über den Futterumfang verteilt angeordnete Anschlagstücke 29 bzw. Aussparungen 30 vorhanden. Im einzelnen können die Anschlagstücke 29 als Wandstücke des Zwischenrings 18 ausgebildet sein, die vom vorderen Rand des Zwischenrings 18 axial nach vorn in die auf der Wandinnenseite der Spannhülse 9 ausgebildeten Aussparungen 30 vorstehen.

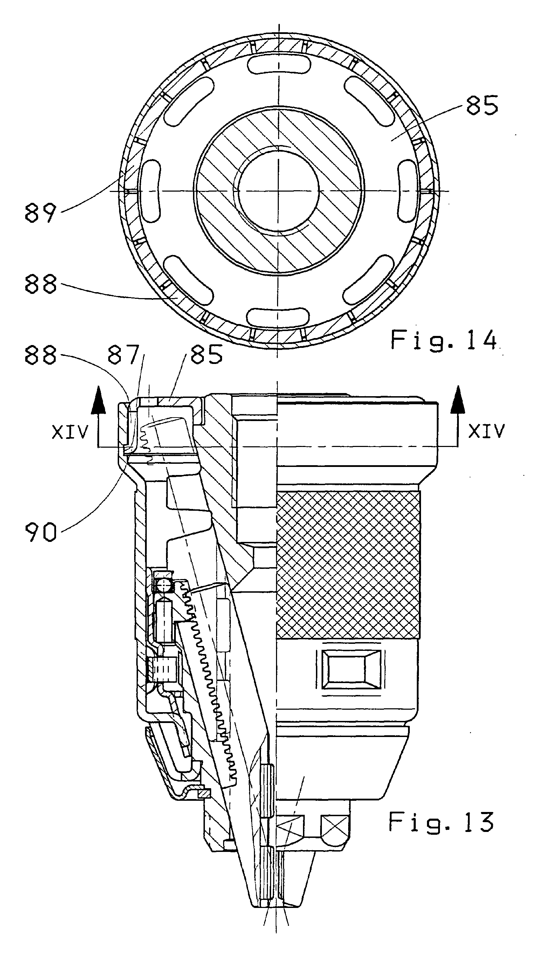

Der Federbügel 38 bildet einen sich in Umfangsrichtung erstreckenden Federarm 36, der am freien Armende das Sperrglied 12 aufweist. Um bei lang ausgedehntem Federarm 36 eine zu weiche Federcharakteristik zu vermeiden, ist bei dem Bohrfutter gemäß Fig. 14 ein durch eine Wellenstruktur 100 gebildetes Dämpfungsglied 101 realisiert. Im eingerückten Zustand des Sperrglieds 12 liegt der Federarm 36 an der Steuerkurve 35 in einem Abstand vom Sperrglied 12 an, der das Durchfedern des Federarms 35 an der Stelle des Sperrglieds 12 um mindestens dessen Eingriffstiefe in die Sperrausnehmungen 10 ermöglicht, so daß beim Festziehen des Futters das Sperrglied 12 über den Kranz der Sperrausnehmungen 10 hinwegrutschen kann. Am Federbügel 38 sind zwei in Umfangsrichtung in gegenseitigem Abstand befindliche Vorsprünge 38', 38" vorgesehen. Von diesen bildet der sperrgliedseitige Vorsprung 38' die Anlage des Federarms 36 an der Steuerkurve 35, der andere Vorsprung 38" das Rastglied 38" bzw den Rastnocken 38" der Rasteinrichtung 17. Die Vorsprünge 38', 38" sind jeweils in Form von Auswölbungen an den Federbügel 38 angebogen.

Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen die Federstege 34 des Federbügels 38 federnd am Kranz der Sperrausnehmungen 10 an, so daß sich der Federbügel 38 in seiner Lage im Zwischenring 18 selbsttätig justiert. In diesem Sinne günstig erweist sich auch ein Federschenkel 71, den der Federbügel 38 mit seinem dem Vorsprung 38" abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Gewindering 8 bzw. Zwischenring 18 und Spannhülse 9 gedämpft werden.

In den Ausführungsbeispielen sind die Anschläge 16', 16", die Sperreinrichtung 11 und die Rasteinrichtung 17 axial vor dem Spanngewinde angeordnet. Selbstverständlich liegt es im Rahmen der Erfindung, diese Teile, zumindest einige davon, axial hinter dem Spanngewinde vorzusehen, wobei sich insbesondere der körperfeste Druckring 21 dazu anbietet, mit den Sperrausnehmungen 10 versehen zu werden.

Im folgenden wird die Funktionsweise des erfindungsgemäßen Bohrfutters anhand des Ausführungsbeispiels nach den Fig. 1 bis 3 kurz erläutert:

Die Fig. 1 und 2.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17" greifende Rastvorsprung 38" sichert den Zwischenring 18 und die Spannhülse 9 gegen Verdrehungen gegeneinander, so daß beim Drehen der Spannhülse 9 über den Zwischenring 18 der Gewindering 8 relativ zum Futterkörper 1 frei verdreht werden kann, solange das Bohrfutter offen ist. Befindet sich in der Werkzeugaufnahme 4 des Bohrfutters ein Bohrerschaft und wird die Spannhülse 9 in Richtung des Pfeils 15, also im Sinne eines Schließens des Futters verdreht, erfolgt zunächst eine Mitnahme des Gewinderings 8 in der schon beschriebenen Weise, bis die Spannbacken 5 am Werkzeugschaft zur Anlage kommen. Eine weitere Mitnahme des Gewinderings 8 durch die Spannhülse 9 ist dann nicht mehr möglich, so daß sich die Spannhülse 9 unter Überwindung der Rasteinrichtung 17 in die in Fig. 2.2 gezeigte Stellung gegenüber dem Zwischenring 18 verstellt. In dieser Stellung drückt die Spannhülse 9 über die Steuerkurve 35 den Federarm 36 radial nach innen und damit das Sperrglied 12 in den eingerückten Zustand an den Sperrausnehmungen 10. Damit ist der Gewindering 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich die Spannhülse 9 relativ zum Futterkörper 1 in Richtung des Pfeiles 15 verdreht werden, wobei nun die Spannhülse 9 über die Anschläge 16" den Zwischenring 18 und damit den Gewindering 8 in Richtung des Pfeiles 15 festzieht. Zum Lösen und Öffnen des gespannten Futters (Fig. 2.2) wird zunächst die Spannhülse 9 in Richtung des Pfeiles 14 verdreht, wobei zunächst wieder die Rasteinrichtung 17 verstellt wird und sich die Anschlagstücke 29 in den Aussparungen 30 wieder verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen der Spannhülse 9 wird über die Anschläge 16' der Gewindering 18 mitgenommen, wodurch das Bohrfutter gelöst und geöffnet wird. Im Ergebnis ist zur Handhabung des erfindungsgemäßen Bohrfutters nur die drehende Betätigung der Spannhülse 9 gegenüber dem Futterkörper 1 erforderlich, was nur eine Hand erfordert, wenn der Futterkörper 1 über die Bohrspindel gehalten oder umgekehrt die Spannhülse 9 von Hand festgehalten und der Futterkörper 1 durch die Bohrspindel gedreht wird. Die Spannhülse 9 kann sich daher axial über praktisch die ganze Länge des Bohrfutters bis zum axial hinteren Futterende erstrecken und dabei die einzige von außen der Hand zugängliche Futterhandhabe bilden. Nur wenn dennoch gewünscht wird, den Futterkörper 1 auch unabhängig von der Bohrspindel manipulieren zu können, empfiehlt es sich, die Abschlußscheibe 85 in Form eines Halterings 40 für den Futterkörper 1 auszubilden, wobei dann der Haltering 40 drehfest mit dem Futterkörper 1 verbunden sein muß.

Um in einfacher und kostengünstiger Weise die zur Verstellung des Sperrgliedes 12 notwendige Steuerkurve 35 in der Spannhülse 9 ausbilden zu können, wird diese durch mindestens einen radial von außen gegen die Spannhülse 9 gepreßten Stempel gefertigt, wobei sich mindestens eine Tasche 17 ausbildet, die vier Stege 81 aufweist, die von der radial äußeren Seite der Spannhülse 9 nach innen vorstehen und durch eine Bodenplatte 82 verbunden sind.

Bei der Fertigung der Spannhülse 9 wird zum Schutz von deren Form in die hohle Spannhülse 9 ein zur Anlage am Innenumfang der Spannhülse 9 kommender zylindrischer Stab eingeführt und radial von außen nach innen der Stempel gegen die Spannhülse 9 gepreßt, der die Tasche 83 formt. Um dabei einen möglichst weitgehenden Schutz der ursprünglichen Hülseform zu erzielen, wird der Stab axial bis über die einzuprägende Tasche 83 hinaus eingeführt und dann erst radial bis zur Anlage an den Innenumfang aufgeweitet, wobei in dem Stab Aufnahmen ausgebildet sind, die die Form der zu formenden Taschen 83 aufweisen und als Matrize wirken, in die der Stempel das Material der Spannhülse 9 einformt. Nach Ausbildung der Taschen 83 kann der Stab wieder verengt und aus der Spannhülse 9 entfernt werden. Da die in Umfangsrichtung liegenden Stege 81 der Tasche 83 zur Verstellung genutzt werden, ist es gleichfalls möglich, daß zur Ausbildung der als in axialer Richtung orientierten Nut 83' ausgebildeten Tasche 83 der Stempel axial gegen die Spannhülse 9 gepreßt wird.

## Patentansprüche

1. Schlüsselloses Bohrfutter mit einem an eine Bohrspindel anschließbaren Futterkörper (1), mit zwischen sich eine Aufnahme für das Bohrwerkzeug bildenden Spannbacken (5), die in geneigt zur Futterachse (3) verlaufenden Führungsaufnahmen zum Öffen und Schließen des Bohrfutters durch einen am Futterkörper (1) drehbar und axial unverschiebbar geführten Gewindering (8) verstellbar sind, und mit einer der Verstellung der Spannbacken (5) durch Verdrehung des Gewinderings (8) dienenden Spannhülse (9), **gekennzeichnet durch** eine hinter dem Gewindering angeordnete, am Futterkörper axial nach vorn abgestützte, der axialen Sicherung der Spannhülse (9) dienenden Abschlußscheibe (85)

2. Bohrfutter nach Anspruch 1, **dadurch gekennzeichnet, daß** der Futterkörper (1) einen Körperbund aufweist, der der Abstützung der Abschlußscheibe (85) axial nach vorn dient.

3. Bohrfutter nach Anspruch 2, **dadurch gekennzeichnet, daß** der Körperbund der Abstützung des Gewinderinges (8) und/oder eines Druckringes (21) axial nach hinten dient.

4. Bohrfutter nach einem der Ansprüche 1 bis 3, **dadurch gekennzeichnet, daß** die Abschlußscheibe (85) im Längsschnitt S-förmig gestaltet ist.

5. Bohrfutter nach einem der Ansprüche 1 bis 4, **dadurch gekennzeichnet, daß** die Abschlußscheibe (85) in eine an der Spannhülse (9) ausgebildete Nut (87) eingreift.

6. Bohrfutter nach einem der Ansprüche 1 bis 5, **dadurch gekennzeichnet, daß** die Abschlußscheibe (85) zweiteilig mit einem dem Futterkörper (1) zugeordneten Ring gebildet ist, der einen an der Spannhülse (9) verankerten Sicherungsring (106) abstützt.

7. Bohrfutter nach Anspruch 6, **dadurch gekennzeichnet**, die Abschlußscheibe (85) auf ihrer Planseite Verstärkungrippen (105) aufweist.

8. Bohrfutter nach einem der Ansprüche 5 bis 7, **dadurch gekennzeichnet, daß** an der Abschlußscheibe (85) radial federnde Zungen (86) ausgebildet sind zum Eingriff in die an der Spannhülse (9) ausgebildeten Nut (87).

9. Bohrfutter nach einem der Ansprüche 1 bis 8, **dadurch gekennzeichnet, daß** die Spannhülse (9) eine Steuerkurve (35) zur Betätigung einer die Verdrehung des Gewinderinges (8) verhindernden bzw freigebenden Sperreinrichtung (11) aufweist.

10. Bohrfutter nach Anspruch 9, **dadurch gekennzeichnet, daß** die Steuerkurve (35) durch Stege (81) gebildet ist, die von der radial äußeren Seite der aus Metall bestehenden Spannhülse (9) nach innen vorstehen, daß die Stege (81) durch die Seitenwände mindestens einer in die Spannhülse (9) eingeprägten Tasche (83) gebildet sind, und daß die in Umfangsrichtung der Spannhülse (9) einander gegenüberliegenden Stege (81 der Tasche (83) zur Betätigung der Sperreinrichtung (11) vorgesehen sind.

11. Bohrfutter nach Anspruhe 9 oder 10, **dadurch gekennzeichnet, daß** die Steuerkurve (35) durch eine Kappe (51) überdeckt ist, die durch eine axial am Futterkörper (1) abgestützte Staubschutzkappe gebildet ist.

12. Bohrfutter nach einem der Ansprüche 9 bis 11, **dadurch gekennzeichnet, daß** die Sperreinrichtung (11) besteht aus einem koaxialen Kranz von Sperrausnehmungen (10) und aus mindestens einem Sperrglied (12), das unter der Kraft einer Sperrfeder durch die Steuerkurve (35) in die Sperrausnehmungen (10) einrückbar ist, wobei das Sperrglied (12) und die Sperrausnehmungen (10) einander in derart geneigten Flankenflächen anliegen, daß diese den Gewindering (8) in der dem Öffnen des Bohrfutters entsprechenden Drehrichtung gegen Verdrehen sperren und beim Verdrehen in der anderen Drehrichtung das Sperrglied gegen die Kraft der Sperrfeder aus den Sperrausnehmungen (10) herausdrücken, und daß durch eine der in die Spannhülse (9) eingeprägten Taschen (83) ein Schaltnocken (84) zur Federspannung gegeben ist, wobei der Gewindering (8) drehfest mit einem koaxialen Zwischenring (18) verbunden ist, der die Sperrfeder und das Sperrglied (12) trägt, und daß der Zwischenring (18) durch Anschläge 816',16") begrenzt relativ zur Spannhülse (9) verdrehbar ist.

13. Bohrfutter nach Anspruch 12, **dadurch gekennzeichnet, daß** eine in Umfangsrichtung zwei Raststellungen aufweisende Rasteinrichtung (17) vorgesehen ist, wobei sich das durch einen Rastnocken einer Rastfeder gebildete Rastglied (38") bei dem in die Sperrausnehmungen (10) eingerückten Sperrglied (12) in der einen Raststellung (17') und bei dem ausgerückten Sperrglied (12) in der anderen Raststellung (17") befindet, und daß die Steuerkurve (35) die beiden Raststellungen (17',17") beinhaltet.

14. Bohrfutter nach Anspruch 13, **dadurch gekennzeichnet, daß** an der Sperrfeder zwei zum simultanen Eingriff in die Randverzahnung zur gemeinsamen Kraftübertragung vorgesehenen Sperrglieder (12) ausgebildet sind, denen jeweils eine Tasche (83) als Schaltnocken (84) zugeordnet ist.

15. Bohrfutter nach Anspruch 14, **dadurch gekennzeichnet, daß** die beiden Sperrglieder (12) an den Enden der Sperrfeder angeordnet sind, daß das in der dem Öffnen des Bohrfutter entsprechenden Drehrichtung vorn liegende Sperrglied (12) in Richtung Sperrausnehmungen (10) abgekröpft ist, und daß das andere Sperrglied (12) schleifenförmig gestaltet ist zur Einwirkung auf die zum vorderen Sperrglied (12) übereinstimmende Flankenfläche.
